(19) Europäisches Patentamt

European Patent Office

Office européen des brevets

(11) Veröffentlichungsnummer: **0 235 585**

**B1**

(12) **EUROPÄISCHE PATENTSCHRIFT**

(45) Veröffentlichungstag der Patentschrift: **18.07.90**

(21) Anmeldenummer: **87101331.4**

(22) Anmeldetag: **31.01.87**

(51) Int. Cl.⁵: **A 01 F 25/20**

(54) **Silo-Ausspeichereinrichtung mit im Silo angeordnetem Teleskop-Fallrohr.**

(30) Priorität: **28.02.86 DE 3606668**

(43) Veröffentlichungstag der Anmeldung:
**09.09.87 Patentblatt 87/37**

(45) Bekanntmachung des Hinweises auf die
Patenterteilung:
**18.07.90 Patentblatt 90/29**

(84) Benannte Vertragsstaaten:
**BE DE ES FR GB IT NL**

(56) Entgegenhaltungen:
**DE-A-3 011 954**
**DE-B-1 250 360**
**DE-C- 831 519**

(73) Patentinhaber: **Schade Fördertechnik GmbH & Co.**
**Am Rosenplätzchen 120**
**D-4600 Dortmund 1 (DE)**

(72) Erfinder: **Fischer, Gerhard, Dipl.-Ing.**
**Friegstrasse 7**
**D-4600 Dotmund-Kirchhörde (DE)**
Erfinder: **Ströcker, Günter, Dipl.-Ing.**
**Natorper Strasse 18**
**D-4757 Holzwickede Kr. Unna (DE)**

(74) Vertreter: **Vollbach, Hans, Dipl.-Ing. et al**
**Patentanwälte Dipl.-Ing. Buschhoff Dipl.Ing**
**Hennicke Dipl.-Ing. Vollbach Kaiser-Wilhelm-**
**Ring 24**
**D-5000 Köln 1 (DE)**

Courier Press, Leamington Spa, England.

**Beschreibung**

Die Erfindung betrifft eine Einrichtung zum Ausspeichern von Schüttgut aus Silos mit einer das Schüttgut auf der Oberfläche des Schüttguthaufens abtragenden, im Silo heb- und senkbaren Räumvorrichtung, die das Schüttgut einem sich vertikal durch das Silo erstreckenden Teleskop-Fallrohr zuführt, das mit der Räumvorrichtung so gekoppelt ist, daß es durch teleskopartiges Ein- und Ausschieben den Hubbewegungen der Räumvorrichtung gekuppeltes oberes Kupplungsrohr mit Schüttgut-Einlauf und mindestens ein sich hieran nach unten zum Siloboden hin anschließendes Schieberohr aufweist, wobei das unterste Schiebe rohr mit einer Abfangeinrichtung versehen ist.

Bei Klein-Silos, die für die Aufnahme von Gärfutter dienen, ist es bekannt, als Abzugsschacht für das Speichergut ein im Silo zentral angeordnetes, freitragendes Teleskop-Fallrohr vorzusehen, dessen oberes Rohr einen um die Siloachse schwenkbaren Räumarm trägt und mit einem Einlauf für das vom Räumarm geförderte Speichergut versehen ist (DE—B—12 50 360). Das obere Rohr bildet zugleich ein Kupplungsrohr, mit welchem das eingefahrene Teleskop-Fallrohr nebst Räumgerät mittels eines Windenseils wieder im Silo hochgezogen wird. Das unterste Rohr der Teleskopsäule weist nach außen gerichtete Anschläge auf, die sich beim Absenken dieses Rohres auf feste Gegenanschläge legen, die in einem Bandtunnel unterhalb des Silobodens angeordnet sind und somit den Abwärtshub des unteren Rohres begrenzen.

Bei einer anderen bekannten Silo-Ausspeichereinrichtung, die für isolierte Klein-Silos zur Aufnahme von Eisstücken bestimmt ist, findet als Abzugsschacht ebenfalls ein Teleskop-Fallrohr Verwendung, welches sich hierbei aber mit seinen Einzelrohren an einem innenliegenden, feststehenden Standrohr führt (DE—PS 831 519). Durch das Standrohr wird der Förderquerschnitt des Teleskop-Fallrohres eingeengt und zugleich der Bauaufwand erhöht.

Die bekannten Silos mit einem als Teleskop-Fallrohr ausgebildeten zentralen Abzugsschacht haben sich in der Praxis für Schüttug-Silos größerer Speicherkapazitäten nicht einführen können. Ein schwerwiegendes Problem dieser Einrichtungen besteht darin, daß sich die Teleskopbewegungen des im Speichergut stehenden Teleskop-Fallrohres im Einsatz nicht sicher beherrschen lassen. Beim Absenken des Räumgerätes im Silo wird zwar der Einschub des Teleskoprohres erzwungen. Es ist aber nicht zuverlässig erreichbar, daß sich das Teleskoprohr hierbei stufenweise Schuß um Schuß von unten nach oben einschiebt. Vielmehr kann es geschehen, daß Einzelrohre der Teleskopsäule oder sogar ganze Rohrgruppen derselben vorzeitig unkontrolliert einschieben, bevor die darunterliegenden Rohre eingeschoben sind. Dies führt dazu, daß die vorzeitig eingeschobenen Rohre oder Rohrgruppen, sobald die Haftkraft zum umgebenden Speichergut überschritten wird, unter ihrem Eigengewicht schlagartig in der Teleskopsäule nach unten stürzen, bevor sie auf den Flansch des darunterliegenden Rohrschusses aufschlagen. Dieses unkontrollierte Abstürzen einzelner Rohre oder sogar ganzer Rohrgruppen führt bei den hohen Gewichten derselben zu außerordentlich großen Schlagbeanspruchungen und als Folge davon zu schweren Erschütterungen und ernsthaften Beschädigungen der gesamten Anlage. Eine Reparatur des im Speichergut stehenden Teleskopfallrohres ist außerordentlich umständlich und zeitraubend.

Es versteht sich, daß die vorgenannten Probleme und Schwierigkeiten sich in besonderem Maße dann stellen, wenn im Silo nicht zuverlässig fließfähige Schüttgüter gespeichert werden, die, wie z.B. Gips, Düngesalze oder sonstige Salze und im Verhalten ähnliche Speichergüter, zum Kleben, Verdichten oder sogar zum Verhärten neigen. Für die Speicherung solcher schwierigen Schüttgüter in Großsilos stehen bis heute keine unbedingt zuverlässigen Schüttgut-Räum- und -Austragseinrichtungen zur Verfügung.

Die Erfindung greift auf die altbekannten, in der Praxis für die Schüttgutspeicherung bisher nicht durchgesetzten Vorschläge zurück, als Abzugsschacht für das auszuspeichernde Schüttgut ein Teleskop-Fallrohr zu verwenden, das von oben her durch die im Silo arbeitende Räumvorrichtung mit dem Speichergut beschickt wird und das Speichergut durch den Siloboden nach unten abfördert. Aufgabe der Erfindung ist es vornehmlich, eine Silo-Ausspeichereinrichtung der genannten Art, die bevorzugt für das Ausspeichern von schwierigen Schüttgütern der oben erwähnten Art aus Silos großer Speicherkapazitäten bestimmt ist, so auszubilden, daß ein schlagartiges Abstürzen einzelner Rohre oder Rohrgruppen des Teleskop-Fallrohres und die hiermit verbundene Gefahr für den Bestand der Anlage zuverlässig unterbunden wird, dies vorteilhafterweise zugleich bei vereinfachter Ausgestaltung der Räumvorrichtung bzw. ihres Teleskop-Fallrohres.

Diese Aufgabe wird erfindungsgemäß dadurch gelöst, daß die Abfangeinrichtung eine dem oder den Schieberohr(en) Absturzsicherung in Gestalt einer mit dem oder den Schieberohr(en) gekoppelten, diese(s) aktiv absenkenden oder in seiner (ihrer) Absenkbewegung(en) stoßdämpfern den oder bremsenden zwangseinschub- oder Abfangeinrichtung ist.

Die Erfindung geht demgemäß von einem Teleskop-Fallrohr aus, das mindestens ein in seiner Einschubfolge innerhalb der Teleskopsäule unbestimmtes und daher möglicherweise unkontrolliert ein- und ausschiebendes Schieberohr aufweist, das zwischen dem mit der Räumvorrichtung gekoppelten und daher von dieser in beiden hubrichtungen mitgenommenen Kupplungsrohr und dem Siloboden bzw. einem hier über einem Abzugsförderer feststehend angeordneten Standrohr eingeschaltet ist; dabei sieht die Erfindung vor, dem "schwimmend" mit undefinierter Haftung zum Schüttgut im Schüttguthaufen liegenden Schieberohr eine Absturzsicherung zuzuordnen, die verhindert, daß das Schieberohr, sobald sein Eigengewicht die Haftkraft der Schüttgutmasse übersteigt, um die Schußlänge nach unten stürzt. Diese Absturzsicherung besteht entweder aus einer das Schieberohr in seiner ausgefahrenen Position abfangenden Abfangeinrichtung oder einer Zwangseinschubeinrichtung, die den Einschub des Schieberohrs im Verlauf der Hubbewegungen der Räumvorrichtung und der Teleskopbewegungen des Teleskoprohrs in der Weise steuert, daß es zu keinem unbeabsichtigten Abstürzen des schweren Schieberohrs kommen kann. Damit ist die erfindungsgemäße Schüttgut-Ausspeichereinrichtung zuverlässig auch in Silos großer Speicherkapazitäten und bei Schüttgütern betriebssicher einsetzbar, die zum Kleben, Verdichten oder Aushärten neigen. Auf ein im Teleskop-Fallrohr angeordnetes Standrohr kann zugunsten eines freitragenden Teleskop-Fallrohrs verzichtet werden.

Die Abfang- oder Zwangseinschubeinrichtungen lassen sich in unterschiedlicher Weise ausgestalten. Als Abfangeinrichtung kann in einer einfachen Ausführungsform eine die Abwärtsbewegung des Schieberohrs dämpfende Stoßdämpfervorrichtung verwendet werden, die zweckmäßig aus mehreren über den Umfang des Schieberohrs verteilt angeordneten Stoßdämpfern, z.B. hydraulischen oder hydropneumatischen Stoßdämpfern bekannter Art bestehen kann. Statt dessen kann die Abfangeinrichtung aber auch von einer bremsend auf das Schieberohr wirkenden Bremsvorrichtung, z.B. einer Seilbremse od.dgl., oder z.B. auch von mindestens einem in Ausschubrichtung des Schieberohrs wirkenden Ausgleichsgewicht gebildet sein. Alle diese Ausgestaltungsformen der Abfangeinrichtung verhindern ein schlagartiges Durchsacken des Schieberohrs, indem sie entweder diese unkontrollierten Abwärtsbewegungen als passiv wirkende Dämpfungsvorrichtungen dämpfen oder aber das Schieberohr solange in seiner hochgefahrenen Position halten, bis es nach erfolgtem Einschub des darüberliegenden Kupplungsrohres durch das Gewicht der sich absenkenden Räumvorrichtung belastet und dadurch langsam mit der Abwärtsbewegung der Räumvorrichtung nach unten gedrückt wird, wie dies bei in Ausschubrichtung des Schieberohrs wirkendem Seilzuggewicht od.dgl. der Fall ist.

Bei einer bevorzugten Ausführungsform der Erfindung wird die genannte Zwangseinschubeinrichtung aber aus einem mit dem Schieberohr verbundenen Hubantrieb od.dgl. gebildet, mit dem sich die Hubbewegung des Schieberohrs zumindest in Einschubrichtung, vorzugsweise zugleich auch in Ausschubrichtung, aktiv steuern läßt, möglichst derart, daß sich beim Absenken der Räumvorrichtung im Silo eine vorbestimmte Einschubfolge der Rohre des Teleskoprohres und zweckmäßig auch beim Aufwärtsbewegen der Räumvorrichtung eine vorbestimmte Ausschubfolge der Rohre des Teleskopschusses ergibt. Für den Hubantrieb werden bevorzugt linear ein- und ausfahrbare Hubgeräte, wie insbesondere druckmittelbeaufschlagte Hubzylinder oder herkömmliche Stellgeräte mit Spindelantrieb, verwendet, obwohl auch aus Ketten- oder Seilantrieben bestehende Hubantriebe, Zahnstangen- und Triebstockantriebe u.dgl. möglich sind.

Es versteht sich, daß das Teleskop-Fallrohr auch mehrere, zwischen die Endrohre eingeschaltete Schieberohre aufweisen kann. Um einerseits den Aufbau des Teleskop-Fallrohres zu vereinfachen und andererseits dessen Funktionssicherheit bei den Arbeitsbewegungen zu erhöhen, empfiehlt es sich, ein Teleskop-Fallrohr mit möglichst wenigen Teleskopschüssen bzw. Teleskopstufen zu verwenden. Nach der Erfindung wird vorteilhafterweise ein Teleskoprohr verwendet, welches aus höchstens vier Teleskopschüssen mit zwei Schieberohren besteht, wobei jedem einzelnen Schieberohr eine Abfang- bzw. Zwangseinschubeinrichtung der genannten Art zugeordnet werden kann. Bei einer bevorzugten Ausführungsform der Erfindung wird aber ein Teleskop-Fallrohr mit nur einem einzigen Schieberohr vorgesehen. Das Teleskop-Fallrohr ist in diesem Fall dreiteilig ausgebildet; es umfaßt das mit der hubbeweglichen Räumvorrichtung gekoppelte Kupplungsrohr, das sich hieran nach unten anschließende Schieberohr, das eine Bodenöffnung des Silobodens durchfaßt, und ein unter dem Siloboden angeordnetes Standrohr od.dgl., das auch von einem Faltenbalg gebildet sein kann, der mit dem unteren Ende des Schieberohrs verbunden ist. Diese bevorzugte Ausführungsform der Erfindung führt schon aufgrund der geringen Anzahl an Teleskopstufen zu einer erheblichen baulichen Vereinfachung und auch zu einer Erhöhung der Funktionssicherheit bei den Arbeitsbewegungen der Teleskopteile, zumal nur ein einziges Schieberohr vorhanden ist, dem als Absturzsicherung die Abfang- oder Zwangseinschubeinrichtung zugeordnet wird. Dabei ergibt sich die Möglichkeit, die Abfang- bzw. Zwangseinschubeinrichtung geschützt und raumgünstig unterhalb des Silobodens unterzubringen und das Telskop-Fallrohr frei von störenden und schwer zugänglichen Einbauteilen zu halten.

Um einerseits unterhalb des Silobodens genügend Freihöhe für das Absenken des Teleskoprohrs und das Unterbringen der erforderlichen Einrichtungen zu erhalten und andererseits einen Verlust an Speicherraum für den Fall, daß der Siloboden hochgelegt wird, in Grenzen zu halten, empfiehlt es sich, den Siloboden von der im Durchgang des Teleskop-Fallrohres dienenden zentralen Bodenöffnung nach außen geneigt anzuordnen. Das Schieberohr wird hierbei zweckmäßig in der zentralen Bodenöffnung unter Abdichtung geführt. Die Räumvorrichtung weist mindestens einen auf die Neigung des Silobodens einstellbaren, um die Siloachse schwenkbaren Räumarm auf, vorzugsweise in Gestalt eines Kratzers. Der Räumarm kann höhenverschwenkbar an einem angetriebenen Drehglied gelagert sein, an dem auch das Kupplungsrohr des Teleskop-Fallrohrs angeschlossen werden kann und das an einem Hubrahmen od.dgl. gelagert ist, der sich an seinen Enden an Vertikalführungen der Silowand führt. Bei einer solchen Ausgestaltung der Ausspeichereinrichtung werden die Reaktionskräfte des Räumgerätes auf kürzestem Wege über den Hubrahmen auf die Silowand abgesetzt. Zugleich erhält das Teleskop-Fallrohr auch an seinem oberen Ende eine zuverlässige Abstützung und Führung.

Wird das Schieberohr gemäß der bevorzugten Ausführungsform der Erfindung in seinen Hubbewegungen mittels eines Hubantriebs, vorzugsweise eines Zylinderantriebe, gesteuert, so empfiehlt es sich, eine Steuereinrichtung vorzusehen, welche die Arbeitsbewegungen des Schieberohrs in Abhängigkeit von der Hubbewegung der Räumvorrichtung steuert. Solche Steuereinrichtungen sind bekannt.

Schließlich umfaßt die Erfindung ein Verfahren zur Steuerung der Hubbewegungen eines Teleskop-Fallrohrs, dessen oberer Rohrteil von einem mit der Räumvorrichtung verbundenen Kupplungsrohr besteht, das als Tauchrohr in ein unteres Schieberohr einfaßt. Nach dem erfindungsgemäßen Verfahren wird die Steuerung der Hubbewegungen derart durchgeführt, daß bei der Absenkbewegung der Räumvorrichtung aus der Hochstellung zunächst das Kupplungsrohr gegenüber dem in der hochgefahrenen Position zwangsläufig gehaltenen Schieberohr einschiebt, wobei erst nach vollem Einschub des Kupplungsrohres in das Schieberohr beide Rohre gemeinsam abgesenkt werden; umgekehrt werden bei der Aufwärtsbewegung der Räumvorrichtung aus der Tieflage am Siloboden zunächst die zusammengeschobenen Schiebe- und Kupplungsrohre im Zusammenwirken des von oben wirkenden Hubwerks mit einer von unten auf das oder die Schieberohre wirkenden Hubkraft gemeinsam hochgefahren, wobei das Kupplungsrohr erst nach Erschöpfung des Hubes des oder der Schieberohre aus diesem ausgefahren wird. Diese Arbeitsbewegungen in beiden Hubrichtungen des Teleskop-rohrs lassen sich insbesondere bei Verwendung von hydraulischen Schubkolbengetrieben als Hubantriebe für das Schieberohr in einfacher und zuverlässiger Weise steuern.

Weitere Merkmale der Erfindung sind in den einzelnen Ansprüchen angegeben.

Die Erfindung wird nachfolgend im Zusammenhang mit den in der Zeichnung dargestellten Ausführungsbeispielen näher erläutert. In der Zeichnung zeigen:

Fig. 1 im Vertikalschnitt durch ein Silo eine erfindungsgemäße Schüttgut-Ausspeichereinrichtung in einer bevorzugten Ausgestaltungsform der Erfindung;

Fig. 2, 3, 4, 5, 6, 7 und 8 jeweils weitere Ausgestaltungsformen erfindungsgemäßer Abfang- bzw. Zwangseinschubeinrichtungen im Vertikalschnitt durch ein Teleskop-Fallrohr, welches bei dem Silo nach Fig. 1 und der hier vorgesehenen Räumvorrichtung zur Verwendung kommen kann, wobei in Fig. 5 ein Querschnitt nach Linie V—V der Fig. 4 gezeigt ist.

In der Zeichnung ist mit 1 ein rundes Silo bezeichnet, welches als Großsilo für die Speicherung von Schüttgütern unterschiedlicher Art, insbesondere solchen Schüttgütern bestimmt ist, die, wie vor allem Gips, Düngesalze oder sonstige Salze, zum Verdichten, Kleben oder sogar Aushärten neigen. Zur Beschikkung des Silos 1 mit dem einzuspeichernden Schüttgut ist im oberen Bereich des Silos eine nicht näher dargestellte Beschickungsvorrichtung 2 angeordnet, die z.B. einen Einspeicherförderer aufweist, der das einzuspeichernde Schüttgut bei 3 zentral in das Silo 1 abwirft.

Die im Silo heb- und senkbare Räumvorrichtung 4 besteht in ihren Hauptteilen aus einem Hubrahmen 5, der als sich quer durch das Silo erstreckender Brückenträger oder als ein in Draufsicht etwa kreuz- oder sternförmiger Träger ausgebildet ist, welcher an seinen Enden in Gelenken 6 angeschlossene Gleitschuhe 7 trägt, mit denen sich die gesamte Räumvorrichtung an Vertikalführungen 8 der zylindrischen Silowand drehschlüssig abstützt und führt. Am Hubrahmen 5 ist ein Hubwerk 9 angeordnet, mit welchem die gesamte Räumvorrichtung 4 im Silo 1 zum Siloboden 10 hin abgesenkt und aus der Tieflage wieder in die dargestellte Hochlage gehoben werden kann. Das Hubwerk 9 besteht zweckmäßig aus mindestens einer Seilwinde, dessen Windenseile 11 über Umlenkrollen 12 an der Decke 13 des Silos und Umlenkrollen 14 des Hubrahmens 5 geführt sind.

An der Unterseite des Hubrahmens 5 ist mittig über eine Drehverbindung bzw. einen Drehkranz 15 ein Drehglied 16 gelagert. Der Drehantrieb 17 befindet sich am Hubrahmen 5; er weist ein angetriebenes Ritzel 18 auf, das im Zahneingriff steht mit einem Zahnkranz 19 des Drehgliedes 16, das somit um die Vertikalachse des Silos 1 drehbar ist. Am Drehglied 16 ist das auf der Oberfläche des Schüttguthaufens 20 arbeitende Räumgerät gelagert, welches bei dem bevorzugten Ausführungsbeispiel aus zwei Räumarmen 21 in Gestalt von Kratzern besteht, die an ihren innenliegenden Enden in (nicht dargestellten) Gelenken begrenzt höhenverschwenkbar am Drehglied 16 gelagert sind, wobei die Höheneinstellung z.B. mittels eines Windenseiles 22 bewerkstelligt werden kann. Mit 23 ist einer der beiden Antriebe der Räumarme 21 bezeichnet. Der Kratzerkettenantrieb des anderen Räumarmes befindet sich verdeckt hinter dem Antrieb 23.

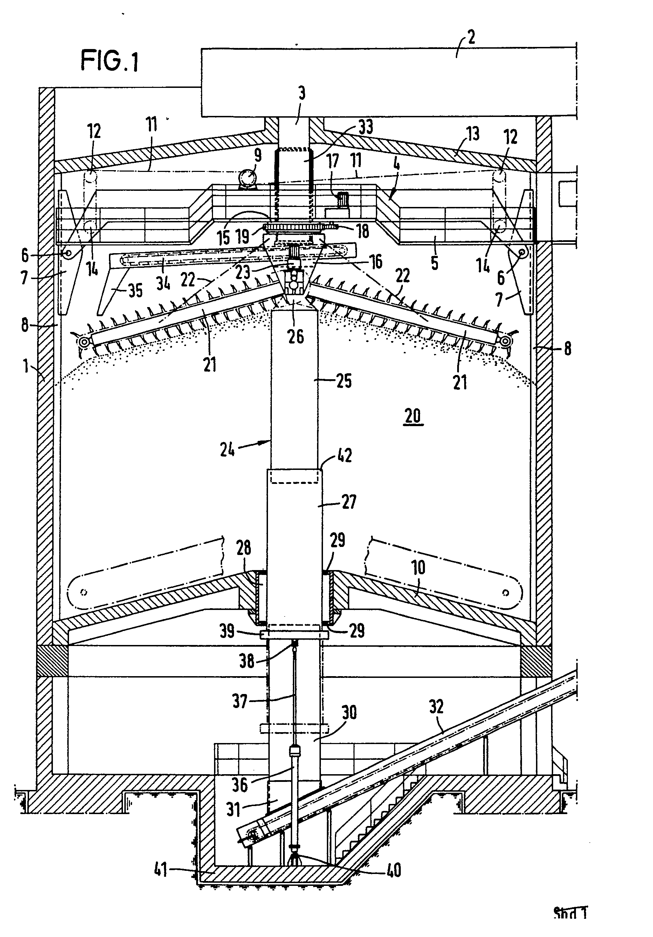

An dem Drehglied 16 ist ferner ein in der vertikalen Mittelachse des Silos 1 stehendes Teleskop-Fallrohr 24 mit seinem oberen Ende angeschlossen, so daß es von dem Hubrahmen 5 bei den Hubbewegungen in Auf- und Abwärtsrichtung mitgenommen wird bzw. den Hubbewegungen durch teleskopartiges Ein- und Ausschieben zu folgen vermag. Bei dem dargestellten bevorzugten Ausführungsbeispiel der Erfindung ist das Teleskop-Fallrohr 24 dreiteilig ausgebildet. Es besteht hierbei aus einem oberen Kupplungsrohr 25, das an seinem oberen Ende mit dem Drehglied 16 druck- und zugfest verbunden ist und außerdem an seinem oberen offenen Ende den Schüttgut-Einlauf 26 bildet, ferner einem sich nach unten an das Rohr 25 anschließenden Schieberohr 27, das eine zentrale Bodenöffnung 28 am Siloboden 10 durchfaßt, dabei zweckmäßig in der Bodenöffnung 28 geführt und mittels umlaufender Dichtungen 29 abgedichtet ist, sowie schließlich einem unterhalb des Silobodens 10 feststehend angeordneten Standrohr 30, das mit seinem unteren Austragsende 31 über einem aufsteigenden Abzugsförderer 32 liegt, der z.B. von einem Kettenkratzförderer gebildet ist. Das Kupplungsrohr 25 ist als Tauchrohr in das im Durchmesser größere Schiebrohr 27 einschiebbar. Bei dem Ausführungsbeispiel nach Fig. 1 weist das Schieberohr 27 den größten Durchmesser und das Standrohr 30 den kleinsten Durchmesser auf, so daß sich auch das Standrohr 30 in das Schieberohr 27 hineinschiebt und außerdem das Kupplungsrohr 25 in das untere Standrohr 30 einschieben kann. In Fig. 1 ist die untere Stellung des Schieberohrs 27 strichpunktiert angedeutet. In dieser Stellung befinden sich die Räumarme 21 in der ebenfalls strichpunktiert angedeuteten unteren Arbeitsposition am Siloboden 10, der von der Bodenöffnung 28 nach außen geneigt ist, um bei ausreichender Freihöhe unter dem Siloboden ein möglichst großes Speichervolumen im Silo zu erhalten.

Das einzuspeichernde Schüttgut wird über die Beschickungsvorrichtung 2 von oben zentral in das Silo abgeworfen. Es fällt durch ein zwischen dem Hubrahmen 4 und der Abwurfstelle 3 angeordnetes, teleskopartiges Einspeicherrohr 33, welches aufgrund seiner Teleskopbewegungen den Hubbewegungen der Räumvorrichtung 4 zu folgen vermag und welches das Schüttgut einem Verteilerband 34 od.dgl. zuführt, das am Drehglied 16 angeordnet ist, sich mit dem Drehglied um die Siloachse dreht und dabei das zugeführte Schüttgut über eine Schurre 35 in das Silo abwirft. Mit Hilfe des Kratzkettenbandes der Kratzer 21 läßt sich das zugeführte Schüttgut über den Siloquerschnitt verteilen.

Während des Ausspeicherbetriebs senkt sich die gesammte Räumvorrichtung im Silo langsam nach unten ab, was mit Hilfe des Hubwerks 9 geschieht. Die Räumarme 21 drehen sich mit dem Drehglied 16 um die Siloachse; sie fördern das Schüttgut auf der Oberseite des Schüttguthaufens 20 nach innen und werfen es an ihren innenliegenden Enden in die Einlauföffnung 26 des Kupplungsrohres 25, das sich mit dem Drehglied 16 drehen kann oder aber über eine Drehverbindung, z.B. einen vertikalen Drehzapfen, mit dem Drehglied 16 so verbunden ist, daß es an dessen Drehbewegung nicht teilnimmt. Das von oben in das Teleskop-Fallrohr 24 abgeworfene Schüttgut fällt im Teleskop-Fallrohr nach unten und kann hier über den ansteigenden Abzugsförderer 32 abgeführt werden.

Dem zwischen den Rohren 25 und 30 in der Teleskopsäule liegenden Schieberohr 27 ist eine Abfang- oder Zwangseinschubeinrichtung zugeordnet, die verhindert, daß sich beim teleskopartigen Einfahren des Fallrohrs 24 ein Zustand einstellt, bei dem das Schieberohr 27 frei nach unten abstürzen kann, sobald sein Eigengewicht die Haftkraft, mit der das Schieberohr in dem umgebenden Speichergut gehalten wird, übersteigt. Mit Hilfe der Abfang- oder Zwangseinschubeinrichtung kann zugleich die Einschubfolge der verschiedenen Rohre des Teleskop-Fallrohres 24 bestimmt bzw. gesteuert werden.

Bei dem dargestellten bevorzugten Ausführungsbeispiel ist zur Absturzsicherung eine Zwangseinschubeinrichtung mit mindestens einem, vorzugsweise zwei auf diametral gegenüberliegenden Seiten des Standrohrs 30 angeordneten hydraulischen Hubzylindern 36 vorgesehen, die mit ihren Kolbenstangen 37 in Gelenken 38 an einem äußeren Ansatz oder Flansch 39 am unteren Ende des Schieberohrs 27 angreifen und sich mit ihren unteren Zylinderteilen in Gelenken 40 gegen den Boden 41 abstützen. Die Zylinder 36 sind vorzugsweise als doppeltwirkende Schubkolbengetriebe ausgebildet, die sich wahlweise auf ihrer einen oder anderen Seite vom Druckmedium beaufschlagen lassen. Mit Hilfe der Hubzylinder 36 läßt sich das Schieberohr 27 somit von der voll ausgezeichneten angehobenen Position in die strichpunktiert angedeutete Absenkposition und umgekehrt bringen, wobei eine gesteuerte Bewegung des Schieberohrs 27 in Abhängigkeit von den Hubbewegungen der Räumvorrichtung 4 erreichbar ist.

Fig. 1 zeigt die Räumvorrichtung 4 in Nähe ihrer Hochlage, in der das Teleskop-Fallrohr 24 im wesentlichen vollständig teleskopartig ausgefahren ist. Bei der Absenkbewegung der Räumvorrichtung 4 aus der Hochstellung wird zunächst das Schieberohr 27 von den ausgefahrenen Hubzylindern 36 in seiner dargestellten Ausschubposition gehalten, so daß das mit der Räumvorrichtung 4 gekuppelte Kupplungsrohr 25 sich in das Schieberohr 27 schiebt. Erst wenn im weiteren Verlauf der Ausspeicherarbeit das Kupplungsrohr 25 im wesentlichen vollständig in das Schieberohr 27 eingeschoben hat, werden beide Rohre 25 und 27 gemeinsam synchron zu der Absenkbewegung der Räumvorrichtung 4 abgesenkt, was durch entsprechende Steuerung der Hubzylinder 36 in Einschubrichtung geschieht. Bei der Absenkbewegung der beiden Rohre 25 und 27 können die Hubzylinder 36 aktiv eingefahren werden. Die Anordnung läßt sich aber auch so treffen, daß die Absenkung der Rohre 25, 27 durch das auflagernde Gewicht der Räumvorrichtung 4 gegen den Widerstand der Hubzylinder 36 erfolgt, deren Flüssigkeitsablauf aus dem Zylinderraum entsprechend gesteuert wird.

Die vorgenannte Einschubfolge der Rohre 25, 27 bei der Ausspeicherarbeit hat den Vorteil, daß auf dem Längenbereich des oberen Kupplungsrohres 25 das tieferliegende Schieberohr 27 keine Arbeitsbewegungen auszuführen braucht und daß vor allem die obere Stirnfläche 42 des Schieberohrs 27 bei jedem Schüttgutpegel stets in Nähe der Oberfläche des Schüttguthaufens 20 liegt, auf welchem die Räumgeräte 21 arbeiten.

Damit wird vermieden, daß das Schieberohr 27 bei seiner Aufwärtsbewegung mit seiner Stirnfläche 42 durch das überlagernde, mehr oder weniger verdichtete oder verhärtete Schüttgut hindurchgedrückt werden muß.

Bei der Aufwärtsbewegung der Räumvorrichtung 4 aus der Tieflage im Bereich des Silobodens 10 in die dargestellte Hochlage werden zunächst beide Rohre 25 und 27 im zusammengeschobenen Zustand gegenüber dem Standrohr 30 hochgefahren, was mit Hilfe des Hubwerks 9 im Zusammenwirken mit den gesteuerten Hubzylindern 36 geschieht. Sobald das Schieberohr 27 seine Ausfahrposition erreicht hat, wird das Kupplungsrohr 25, welches von der sich hochbewegenden Räumvorrichtung 4 mitgenommen wird, aus dem Schieberohr 27 ausgefahren, welches dabei von den Hubzylindern 36 in seiner ausgefahrenen Positon gehalten und demgemäß gegen Absturz gesichert wird.

Es besteht auch die Möglichkeit, anstelle der Ausschubzylinder 36 eine die Abwärtsbewegung des Schieberohrs 27 dämpfende Stoßdämpfervorrichtung mit einem oder vorzugsweise mehreren Stoßdämpfern vorzusehen, die sich ebenso wie die Zylinder 36 am Boden 41 abstützen und am unteren Ende des Schieberohrs 27 angreifen. Solche hydraulischen oder hydropneumatischen Stoßdämpfer sind in der Technik bekannt. Die Stoßdämpfer bewirken in diesem Fall nur eine passive Dämpfung der Abwärtsbewegung des Schieberohrs 27, so daß ein plötzliches Durchsakken dieses Schieberohrs im Betrieb nicht eintreten kann. Das Schieberohr 27 wird in diesem Fall gegen die Wirkung der Stoßdämpfer zum Einschub gebracht, wenn bei Überwindung der Haftkraft zum umgebenden Schüttgut das Schieberohr sich unter seinem Eigengewicht absenkt oder wenn das Schieberohr durch die sich absenkende Räumvorrichtung 4 nach erfolgtem Einschub des Kupplungsrohres nach unten gedrückt wird. Bei der Aufwärtsbewegung der Räumvorrichtung 4 schiebt zunächst das von der Räumvorrichtung 4 mitgenommene Kupplungsrohr 25 aus, welches bei vollem Ausschub mit seinem endseitigen Außenflansch gegen einen Innenflansch am oberen Ende des Schieberohres 27 läuft und damit das Schieberohr bei der weiteren Aufwärtsbewegung der Räumvorrichtung mitnimmt. Die Verwendung solcher Flanschrohre für Teleskoprohre ist allgemein üblich.

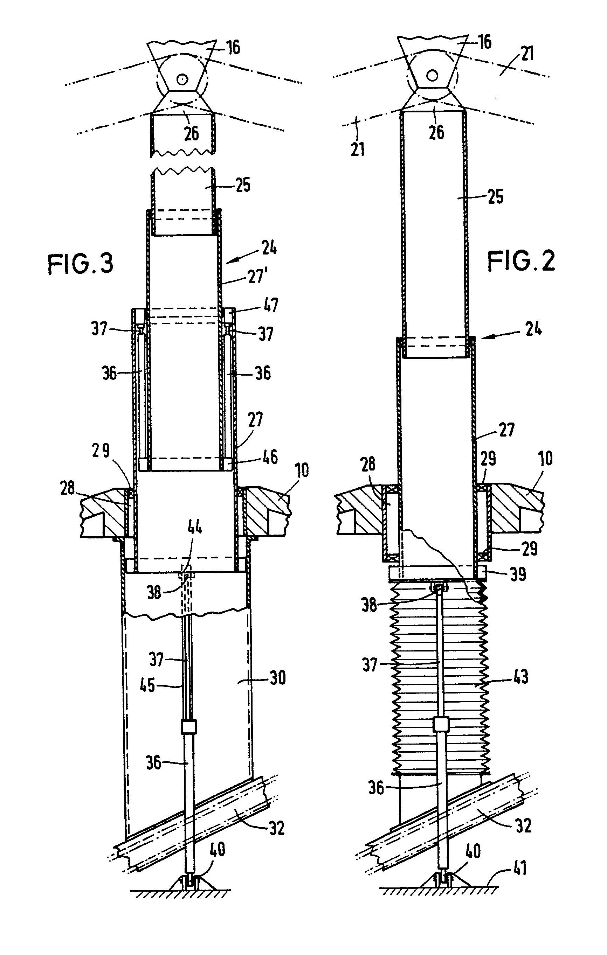

In den Fig. 2 bis 8 sind einige Ausführungsvarianten zu dem bevorzugten Ausführungsbeispiel nach Fig. 1 gezeigt. Bei der Ausführungsform nach Fig. 2 ist das untere Standrohr 30 durch einen Faltenbalg 43 ersetzt, der mit dem unteren Ende des Schieberohrs 27 verbunden ist und damit die längenveränderliche Rohrverbindung zwischen Schieberohr und Abzugsförderer 32 bildet. Im übrigen entspricht diese Einrichtung derjenigen nach Fig. 1.

Während in Fig. 1 sich das Schieberohr 27 über das Standrohr 30 schiebt, kann gemäß Fig. 3 auch ein Standrohr 30 vorgesehen werden, dessen Durchmesser größer ist als derjenige des Schieberohrs 27, so daß sich das Schieberohr in das Standrohr 30 schieben kann. Bei dieser Anordnung empfiehlt es sich, die außenliegenden Hubzylinder 36 (oder die statt dessen verwendeten Stoßdämpfer) in den Kolbenstangen-Gelenken 38 an Konsolen oder sonstigen radialen Ansätzen 44 am unteren Ende des Schieberohres 27 anzuschließen, die axiale Schlitze 45 des Standrohrs 30 durchfassen.

Außerdem zeigt Fig. 3 eine Ausführungsform, bei der zwischen den endseitigen Rohren 25 und 30 zwei teleskopartig ineinander verschiebbare Schieberohre 27 und 27' vorgesehen sind. Dabei ist jedem der beiden Schieberohre 27, 27' eine Abfang- bzw. Zwangseinschubeinrichtung der genannten Art zugeordnet, vorzugsweise in Gestalt der obengenannten druckmittelbetätigten Hubzylinder 36. Die dem oberen Schieberohr 27' zugeordneten Druckmittelzylinder 36 liegen zwischen den Rohren 27, 27'; sie stützen sich an einem Flansch 46 am unteren Ende des Schieberohrs 27' ab und greifen mit ihren Kolbenstangen 37 in Gelenken an einem Flansch 47 am oberen Ende des Schieberohrs 27 an. Damit ist ebenfalls eine Absturzsicherung sowie vorzugsweise auch eine Ein- und Ausschubsteuerung der verschiedenen Rohre beim Einschub des Teleskop-Fallrohrs 24 erreichbar. Die Steuerung erfolgt hier vorzugsweise derart, daß bei der Absenkbewegung der Räumvorrichtung 4 zunächst das Kupplungsrohr 25 in das obere Schieberohr 27' einschiebt, anschließend das obere Schieberohr 27' zusammen mit dem eingefahrenen Kupplungsrohr 25 in das untere Schieberohr 27 einschiebt und dann sämtliche zusammengeschobenen Rohre 25, 27' und 27 gemeinsam in das Standrohr 30 eingefahren werden. Die Ausschubbewegung wird sinngemäß in umgekehrter Folge durchgeführt, wobei zunächst die drei Rohre 25, 27' und 27 gemeinsam bis zur Erschöpfung des Hubes des Rohres 27 ausgefahren und erst dann die beiden Rohre 25 und 27' aus dem gegen Absenken gehaltenen Rohr 27 ausgefahren werden, bevor dann das obere Rohr 25 aus dem oberen Schieberohr 27' ausschiebt, welches hierbei über die Hubzylinder 36 in seiner Ausschubposition gehalten wird.

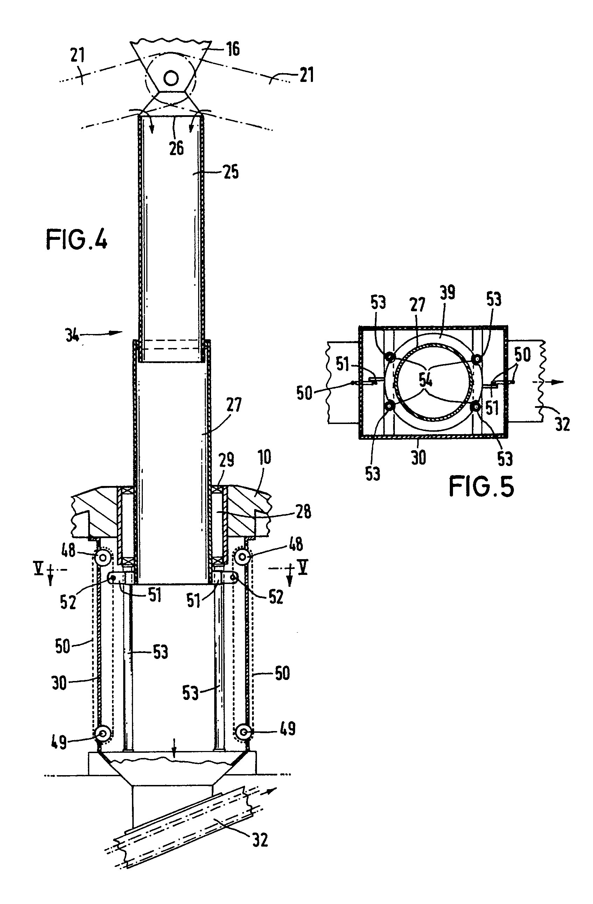

Anstelle der bevorzugt vorgesehenen Hubzylinder 36 können auch andere linear verlängerbare und verkürzbare Stellmotoren, z.B. herkömmliche Stellgeräte mit angetriebenen Spindeln, oder auch Hubantriebe oder Stoßdämpfervorrichtungen anderer Art vorgesehen werden. In den Fig. 4 und 5 ist ein Ausführungsbeispiel gezeigt, bei dem als Hubantrieb für das Schieberohr 27 ein Kettenantrieb vorgesehen ist, der mit um Antriebs- und Umkehrräder 48 und 49 umlaufenden endlosen Antriebsketten 50 versehen ist, die an dem Standrohr 30 vertikal übereinander gelagert sind. Das Schieberohr 27 weist am unteren Ende radiale Anschlußorgane 51 auf, mit denen es bei 52 mit den vertikal umlaufenden Ketten 50 verbunden ist, die auf diametral gegenüberliegenden Seiten des Schieberohrs angeordnet sind. Mit Hilfe der Kettenantriebe 48, 49, 50 läßt sich das Schieberohr 27 in seinen Hubbewegungen in der gleichen Weise steuern wie mit Hilfe der zuvor beschriebenen Hubzylinder 36. Auch ist es möglich, die Kettenantriebe lediglich als Bremsvorrichtungen auszubilden, die, wie die oben erwähnten Stoßdämpfer, das Schieberohr 27 gegen schlagartiges Abwärtsgleiten halten. Wie die Fig. 4 und 5 weiterhin zeigen, sind unter dem Siloboden 10 Führungsstangen 53 für die drehschlüssige Führung vorgesehen, die im Inneren des hier kastenförmigen Standrohrs 30 angeordnet sind und an denen sich das Schieberohr 27 mit an seinem unteren Flansch 39 angeordneten Führungsnuten 54 od.dgl. so führt, daß es an einer Drehung um seine Rohrachse gehindert ist.

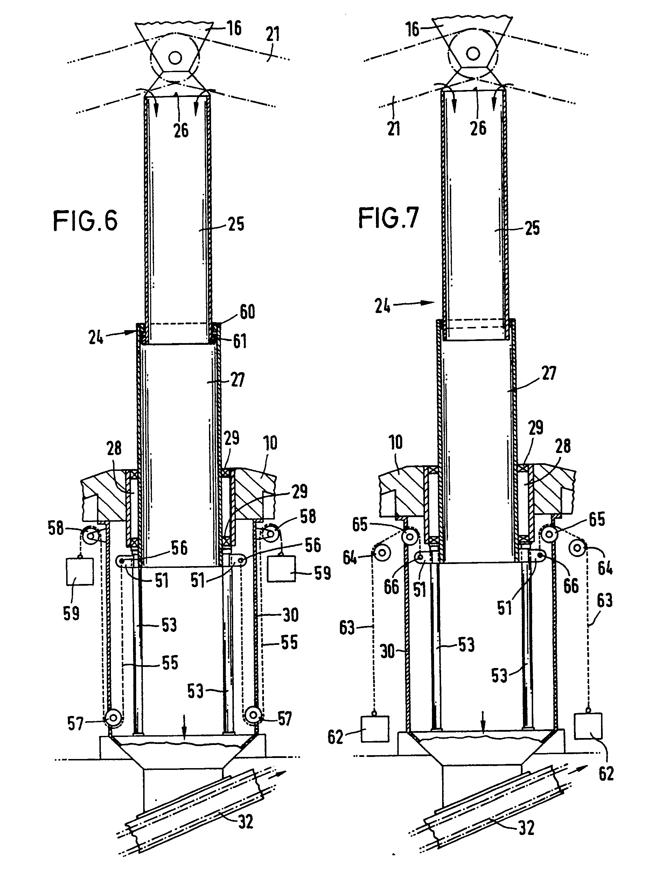

Fig. 6 zeigt ein weiteres Ausführungsbeispiel eines insbesondere bei dem Silo nach Fig. 1 verwendbaren Teleskop-Fallrohrs 24, welches sich von dem Ausführungsbeispiel nach Fig. 4 dadurch unterscheidet, daß hier der Kettenantrieb ersetzt ist durch einen nur in Absenkrichtung des Schieberohrs 27 wirkenden Hubantrieb in Gestalt eines gewichtsbelasteten Seilantriebs. Dieser umfaßt mehrere, z.B. zwei unter dem Siloboden 10 angeordnete Seile od.dgl. 55, die mit ihrem einen Ende bei 56 an Anschlußorganen 51 am unteren Ende des Schieberohrs 27 befestigt sind, von hier aus nach unten zu einer Umlenkrolle 57 verlaufen, an der sie in Gegenrichtung umgelenkt und zu einer weiteren Umlenkrolle 58 hochgeführt werden, wobei sie an ihren anderen, außenliegenden Enden ein Antriebsgewicht 59 tragen. Die Umlenkrollen 57 und 58 sind an dem Standrohr 30 gelagert, welches im Bereich der unteren Umlenkrollen 57 mit Durchgangsöffnungen für die Seile 55 versehen ist. Die Seilzüge sind, wie ersichtlich, so ausgebildet, daß sie das Schieberohr 27 nach unten ziehen. Dabei sind die Gewichte 59 in Anpassung an das im Silo gespeicherte Schüttgut so ausgelegt, daß sie das Schieberohr 27 in jedem Fall unter Überwindung der Haftkraft am umgebenden Schüttgut nach unten ziehen, wenn sich die Räumvorrichtung 4 im Silo absenkt. Damit wird sichergestellt, daß bei der Absenkbewegung der Räumvorrichtung das Schieberohr 27 nicht zunächst hängenbleiben kann und dann nach einem mehr oder weniger großen Einschubweg des oberen Kupplungsrohrs 25 plötzlich abstürzt. Um das Schieberohr 27 bei der Aufwärtsbewegung entgegen der von den Seilzügen ausgeübten Kraft nach oben zu ziehen, sind die Rohre 25 und 27 an ihren einander zugewandten Enden mit entsprechenden Flanschen 60, 61 versehen, so daß das Schieberohr 27 von der sich aufwärtsbewegenden Räumvorrichtung 4 mitgenommen wird, sobald das Kupplungsrohr 25 sich aus dem Schieberohr 27 bis zum Flanschanschlag 60, 61 ausgeschoben hat.

Während bei dem Ausführungsbeispiel nach Fig. 6 die Seilzüge einen Zwangseinschub für das Schieberohr 27 bewirken, zeigt Fig. 7 eine Ausführungsform, bei der die mit den Gewichten, 62 versehenen Seilzüge in Ausschubrichtung des Schieberohrs 27 wirken. Die Gewichte 62 sind hier Ausgleichsgewichte, welche das Eigengewicht des Schieberohrs 27 ausgleichen. Die Ausgleichsgewichte 62 sind über Seile od.dgl. 63 und Umlenkrollen 64, 65 bei 66 an den Anschlußorganen 51 des Schieberohrs 27 angeschlossen, wobei auch hier die Umlenkrollen 64, 65 an dem Standrohr 30 gelagert werden können, welches das Schieberohr 27 sowie die seiner Führung und Drehsicherung dienenden Führungsstützen 53 umschließt. Die Seilzüge 62 bis 66 ziehen das Schieberohr 27 in seine obere Position und halten es in dieser Position, wenn bei der Ausspeicherarbeit sich zunächst das Kupplungsrohr 25 mit der sich absenkenden Räumvorrichtung 4 in das Schieberohr 27 einschiebt. Bei vollem Einschub wird dann das Schieberohr 27 gegen die Wirkung der Seilzüge durch die sich absenkende Räumvorrichtung 4 eingeschoben.

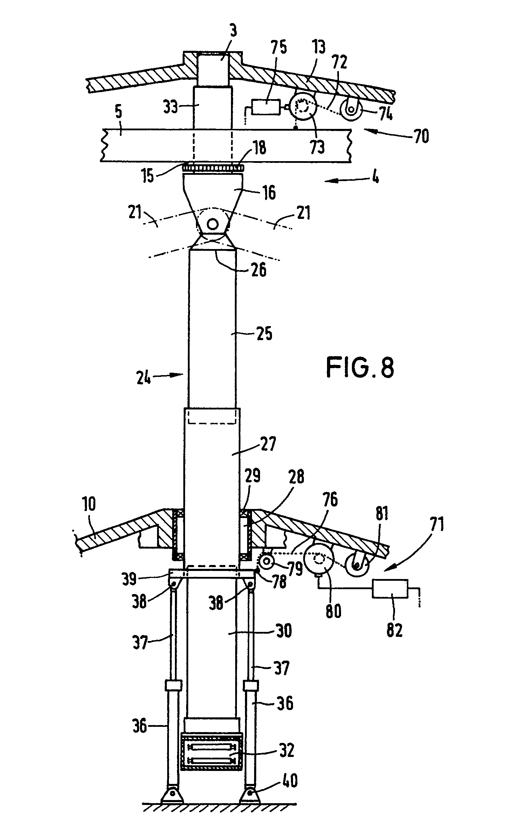

Fig. 8 zeigt eine mit dem Ausführungsbeispiel nach Fig. 1 vergleichbare Anordnung der Steuerung der Hubzylinder 36 in Abhängigkeit von der Hubbewegung der Räumvorrichtung 4. Zu diesem Zweck ist eine den Hubweg bzw. die jeweilige Hubposition der Räumvorrichtung 4 ermittelnde Wegmeßvorrichtung 70 sowie eine den Hub bzw. die jeweilige Ausfahrposition der Zylinder 36 ermittelnde Meßvorrichtung 71 vorgesehen. Die Meßvorrichtung 70 kann aus einem einfachen Wegmeßgerät mit Meßseil 72 bestehen, das z.B. mit dem Hubrahmen 5 verbunden, um eine Meßrolle 73 umgelenkt und von einer Rolle 74 abspulbar ist, wobei die Meßrolle 73 in Abhängigkeit von der Hubbewegung des Hubrahmens 5 Meßsignale an einen Empfänger 75 liefert. Die untere Meßvorrichtung 71 kann ebenfalls aus einem einfachen Wegmeßgerät oder Zählwerk mit einem Meßseil 76 bestehen, das bei 78 am Flansch 39 des Schieberohrs 27 angeschlossen, über Rollen 79 und 80 nach außen herausgeführt und von einer Rolle 81 abspulbar ist, wobei die Meßrolle 80 in Abhängigkeit von den Hubbewegungen des Schieberohrs 27 Meßsignale an eine Meß- oder Zählvorrichtung 82 liefert. Die Meßsignale der Meßvorrichtung 75, 82 werden in bekannter Weise verglichen bzw. zu die Hubzylinder 36 steuernden Steuersignalen umgewandelt, derart, daß die Hubzylinder nach Art einer Folge- oder Gleichlaufsteuerung in ihren Hubbewegungen auf die Hubbewegungen der Räumvorrichtung 4 abgestimmt werden. Folge- oder Gleichlaufsteuerungen sind in der Technik in verschiedenen Ausführungen bekannt.

Es versteht sich, daß die Ringspalten zwischen den verschiedenen Rohren des Teleskopfallrohres durch an den Rohrenden angeordnete Umfangsdichtungen abgedichtet werden können. Solche Dichtungen sind in der Zeichnung angedeutet.

## Patentansprüche

1. Einrichtung zum Ausspeichern von Schüttgut aus Silos mit einer das Schüttgut auf der Oberfläche des Schüttguthaufens abtragenden, im Silo (1) heb- und senkbaren Räumvorrichtung (4), die das Schüttgut einem sich vertikal durch das Silo erstreckenden Teleskop-Fallrohr (24) zuführt, das mit der Räumvorrichtung (4) so gekoppelt ist, daß es durch teleskopartiges Ein- und Ausschieben den Hubbewegungen der Räumvorrichtung (4) folgt, wobei das Teleskop-Fallrohr ein mit der Räumvorrichtung (4) gekuppeltes oberes Kupplungsrohr (25) mit Schüttgut-Einlauf und mindestens ein sich hieran nach unten zum Siloboden hin anschließendes Schieberohr (27, 27') aufweist, wobei das unterste Schieberohr (27) mit einer Abfangeinrichtung versehen ist, dadurch gekennzeichnet, daß die Abfangeinrichtung eine dem oder den Schieberohr(en) (27, 27') zugeordnete Absturzsicherung in Gestalt einer mit dem oder den Schieberohr(en) (27, 27') gekoppelten diese(s) aktiv absenkenden oder in seiner (ihrer) Absenkbewegung(en) stoßdämpfern den oder bremsenden Zwangseinschub- oder Abfangeinrichtung (36, 48 bis 52, 55 bis 59, 62 bis 65) ist.

2. Einrichtung nach Anspruch 1, dadurch gekennzeichnet, daß die Abfangeinrichtung aus einer die Abwärtsbewegung des Schieberohres (27, 27') dämpfenden Stoßdämpfervorrichtung besteht, die mehrere über den Umfang des Schieberohrs (27, 27') verteilt angeordnete Stoßdämpfer aufweist.

3. Einrichtung nach Anspruch 1, dadurch gekennzeichnet, daß die Abfangeinrichtung von mindestens einem in Ausschubrichtung des Schieberohres (27, 27') wirkenden Ausgleichsgewicht (62) gebildet ist.

4. Einrichtung nach Anspruch 1, dadurch gekennzeichnet, daß die Zwangseinschubeinrichtung aus einem mit dem Schieberohr (27, 27') verbundenen Hubantrieb (36, 48 bis 52, 55 bis 59) besteht.

5. Einrichtung nach Anspruch 4, dadurch gekennzeichnet, daß mittels des Hubantriebs (36, 50 bis 52) das Schieberohr (27, 27') sowohl in Absenkrichtung als auch in Gegenrichtung antriebbar ist.

6. Einrichtung nach Anspruch 4 oder 5, dadurch gekennzeichnet, daß der Hubantrieb aus mindestens einem linear ein- und ausfahrbaren Hubgerät, wie insbesondere einem druckmittelbeaufschlagten Hubzylinder (36) oder einem Stellgerät mit Spindel, besteht.

7. Einrichtung nach Anspruch 4 oder 5, dadurch gekennzeichnet, daß der Hubantrieb aus mindestens einem Kettentrieb (48 bis 52) oder mindestens einem Seiltrieb od.dgl. besteht.

8. Einrichtung nach Anspruch 4, dadurch gekennzeichnet, daß der Hubantrieb aus mindestens einem in Absenkrichtung auf das Schieberohr (27, 27') wirkenden gewichtsbelasteten Seilzug (55 bis 59) besteht.

9. Einrichtung nach einem der Ansprüche 1 bis 8, dadurch gekennzeichnet, daß bei mehreren Schieberohren (27, 27') jedem derselben eine Abfang- bzw. Zwangseinschubeinrichtung zugeordnet ist.

10. Einrichtung nach einem der Ansprüche 1 bis 9, dadurch gekennzeichnet, daß das Teleskop-Fallrohr (24) dreiteilig ausgebildet ist und aus dem mit der Räumvorrichtung (4) gekuppelten Kupplungsrohr (25), dem sich hieran nach unten anschließenden Schieberohr (27), das eine Bodenöffnung (28) des Silobodens (10) durchfaßt, und einem unter dem Siloboden angeordneten Standrohr (30) besteht, wobei die Abfang- oder Zwangseinschubeinrichtung unterhalb des Silobodens (10) angeordnet ist.

11. Einrichtung nach Anspruch 10, dadurch gekennzeichnet, daß das Standrohr (30) von einem Faltenbalg (43) gebildet ist, der mit dem unteren Ende des Schieberohres (27) verbunden ist.

12. Einrichtung nach einem der Ansprüche 1 bis 11, dadurch gekennzeichnet, daß die Räumvorrichtung mindestens einen Räumarm (21) aufweist, der höhenverschwenkbar an einem angetriebenen Drehglied (16) gelagert ist, an dem das Kupplungsrohr (25) des Teleskop-Fallrohres (24) angeschlossen ist und das an einem Hubrahmen (5) gelagert ist, der sich an seinen Enden an Vertikalführungen (8) der Silowand führt.

13. Einrichtung nach einem der Ansprüche 1 bis 12, gekennzeichnet durch eine die Arbeitsbewegung des Schieberohres (27, 27') in Abhängigkeit von der Hubbewegung der Räumvorrichtung (4) steuernde Steuereinrichtung.

14. Einrichtung nach einem der Ansprüche 1 bis 13, gekennzeichnet durch eine unterhalb des Silobodens (10) angeordnete, das Schieberohr (27) drehschlüssig führende Führungsvorrichtung (53).

15. Verfahren zur Steuerung der Hubbewegungen eines in einem Silo (1) angeordneten Teleskop-Fallrohres (24), dessen oberer Rohrteil von einem mit der Räumvorrichtung (4) verbundenen Kupplungsrohr (25) gebildet ist, das als Tauchrohr in ein unteres Schieberohr (27) einfaßt, dadurch gekennzeichnet, daß bei der Absenkbewegung der Räumvorrichtung (4) aus der Hochstellung zunächst das Kupplungsrohr (25) gegenüber dem in der hochgefahrenen Position zwangsläufig gehaltenen Schieberohr eingeschoben wird, wobei erst etwa nach vollem Einschub des Kupplungsrohrs (25) in das Schieberohr (27) beide Rohre gemeinsam abgesenkt werden, und daß umgekehrt bei der Aufwärtsbewegung der Räumvorrichtung (4) aus der Tieflage zunächst die zusammengeschobenen Schiebe- und Kupplungsrohre (25, 27) im Zusammenwirken zwischen dem Hubwerk (9) der Räumvorrichtung (4) und einer von unten auf das Schieberohr (27) wirkenden Hubkraft gemeinsam hochgefahren werden, wobei das Kupplungsrohr (25) erst etwa nach Erschöpfung des Hubes des Schieberohrs (27) aus diesem ausgefahren wird.

**Revendications**

1. Dispositif pour décharger des produits en vrac de silos, comprenant un dispositif de nivelage (4) pouvant être soulevé et abaissé dans le silo (1) qui racle le produit en vrac sur la surface supérieure du tas formé par ce produit et qui achemine le produit en vrac vers une gouttière télescopique de descente (24) s'étendant verticalement dans le silo, cette gouttière étant accouplée au dispositif de nivelage (4) de manière qu'elle suive par des mouvements télescopiques de sortie et de rentrée les mouvements de la course télescopique de descente et de montée du dispositif de nivelage (4), la gouttière télescopique de descente comprenant un tube d'accouplement supérieur (25) accouplé au dispositif de nivelage (4) et comportant une entrée pour le produit en vrac, et au moins un tube coulissant (27, 27') qui s'y raccorde vers le bas en direction du fond du silo, le tube coulissant le plus en bas (27) étant muni d'un dispositif de retenue, caractérisé en ce que le dispositif de retenue est constitué par un dispositif de sécurité anti-chute pour le ou les tubes coulissants, ayant la forme d'un dispositif de retenue ou d'un dispositif de rentrée forcée abaissant ces derniers de façon active ou amortissant ou freinant leur mouvement de descente.

2. Dispositif selon la revendication 1, caractérisé en ce que le dispositif de retenue est constitué par un dispositif amortisseur de chocs qui amortit les mouvements de descente du tube coulissant (27, 27'), dispositif qui comprend plusieurs amortisseurs répartis sur la périphérie du tube coulissant (27, 27').

3. Dispositif selon la revendication 1, caractérisé en ce que le dispositif de retenue est constitué par au moins un poids compensateur (62) agissant dans la direction de la sortie du tube coulissant (27, 27').

4. Dispositif selon la revendication 1, caractérisé en ce que le dispositif de rentrée forcée est constitué par un mécanisme élévateur (36, 48 ou 52, 55 à 59) relié au tube coulissant (27, 27').

5. Dispositif selon la revendication 4, caractérisé en ce que le tube coulissant (27, 27') peut être entraîné aussi bien en direction du bas qu'en direction contraire par le mécanisme élévateur (36, 50 à 52).

6. Dispositif selon la revendication 4 ou 5, caractérisé en ce que le mécanisme élévateur est constitué par au moins un mécanisme élévateur pouvant être rentré et sorti linéairement, tel que notamment un vérin élévateur (36) alimenté par un agent de pression, ou par un dispositif de réglage à broche.

7. Dispositif selon la revendication 4 ou 5, caractérisé en ce que le mécanisme élévateur est constitué par au moins un mécanisme d'entraînement à chaîne (48 à 52) ou par au moins un mécanisme d'entraînement à câble ou analogue.

8. Dispositif selon la revendication 4, caractérisé en ce que le mécanisme d'entraînement est constitué par au moins un câble (55 à 59) chargé par un poids et exerçant son effet sur le tube coulissant (27, 27') dans la direction de la descente.

9. Dispositif selon l'une quelconque des revendications 1 à 8, caractérisé en ce que dans le cas de plusieurs tube coulissant (27, 27'), un dispositif de retenue ou un dispositif de rentrée forcée est associé à chacun d'eux.

10. Dispositif selon l'une quelconque des revendications 1 à 9, caractérisé en ce que la gouttière télescopique de descente (24) est constituée en trois parties et est composée du tube d'accouplement (25) accouplé au dispositif de nivelage (4), le tube coulissant (27) qui s'y raccorde vers le bas et qui traverse une ouverture (28) du fond (10) du silo, et un tube vertical (30) disposé au-dessous du fond du silo, le dispositif de retenue ou le dispositif de rentrée forcée étant disposé au-dessous du fond (10) du silo.

11. Dispositif selon la revendication 10, caractérisé en ce que le tube vertical (30) est formé par un sac en soufflet (43) relié à l'extrémité inférieure du tube coulissant (27).

12. Dispositif selon l'une quelconque des revendications 1 à 11, caractérisé en ce que le dispositif de nivelage comprend au moins un bras de nivellement monté de façon à pouvoir être pivoté en hauteur sur un organe tournant entraîné (16), auquel est raccordé le tube d'accouplement (25) de la gouttière télescopique de descente (24) et qui est monté sur un châssis élévateur (5) qui est guidé par ses extrémités dans des guides verticaux (8) de la paroi du silo.

13. Dispositif selon l'une quelconque des revendications 1 à 12, caractérisé par un dispositif de commande qui commande le mouvement de travail de tube coulissant (27, 27') en fonction du mouvement du dispositif de nivelage (4).

14. Dispositif selon l'une quelconque des revendications 1 à 13, caractérisé par un dispositif de guidage (53) disposé au-dessous du fond (10) du silo et guidant le tube coulissant (27) tout en l'empêchant de tourner.

15. Procédé de commande des mouvements de montée et de descente d'une gouttière télescopique de descente (24) montée dans un silo (1), dont la partie tubulaire supérieure est constituée par un tube d'accouplement (25) relié au dispositif de nivelage (4), qui pénètre en tant que tube plongeur dans un tube coulissant inférieur (27), caractérisé en ce que pendant le mouvement de descente du dispositif de nivelage (4) depuis sa position haute, le tube d'accouplement (25) est d'abord enfoncé dans le tube coulissant maintenu de façon forcée dans sa position sortie, les deux tubes étant abaissés en commun seulement après l'enfoncement sensiblement complet du tube d'accouplement (25) dans le tube coulissant (27), et en ce qu'inversement, pendant le mouvement ascendant du dispositif de nivelage (4) depuis sa position basse, les tubes de coulissement et d'accouplement (25, 27) enfoncés l'un dans l'autre sont remontés en commun par coopération entre le mécanisme élévateur (9) du dispositif de nivelage (4) et une force élévatrice agissant par le bas sur le tube coulissant (27), le tube d'accouplement (25) ne sortant du tube coulissant (27) que sensiblement après la fin de la course de ce dernier.

**Claims**

1. Arrangement for unloading fluent solid material from silos, comprising a clearing apparatus (4) which removes the fluent solid material on the surface of the heap of fluent solid material, can be lifted and lowered in the silo (1) and feeds the fluent solid material to a telescopic chute (24) which extends vertically through the silo and is coupled to the clearing apparatus (4) in such a way that it follows the lifting movements of the clearing apparatus (4) by telescopic retraction and extension, the telescopic chute having an upper coupling tube (25), which is coupled to the clearing apparatus (4) and has an inlet for the fluent solid material, and has at least one slide tube (27, 27') which adjoins the coupling tube (25) at the bottom towards the silo base, the lower most slide tube (27) being provided with a retaining device, characterized in that the retaining device is a fall-protection means which is allocated to the slide tube(s) (27, 27') and has the configuration of a positive-retraction or retaining device (36, 48 to 52, 55 to 59, 62 to 65) which is coupled to the slide tube(s) (27, 27') and actively lowers the latter or cushions or brakes it (them) in its (their) lowering movement(s).

2. Arrangement according to Claim 1, characterized in that the retaining device consists of a shock-absorber mechanism which cushions the downward movement of the slide tube (27, 27') and has a plurality of shock-absorbers arranged so as to be distributed over the periphery of the slide tube (27, 27').

3. Arrangement according to Claim 1, characterized in that the retaining device is formed by at least one counterbalance weight (62) acting in the extension direction of the slide tube (27, 27').

4. Arrangement according to Claim 1, characterized in that the positive-retraction device consists of a lifting drive (36, 48 to 52, 55 to 59) connected to the slide tube (27, 27').

5. Arrangement according to Claim 4, characterized in that, by means of the lifting drive (36, 50 to 52), the slide tube (27, 27') can be driven both in the lowering direction and in the opposite direction.

6. Arrangement according to Claim 4 or 5, characterized in that the lifting drive consists of at least one linearly retractable and extendable lifting appliance, such as, in particular, a lifting cylinder (36) acted upon by pressure medium or a regulating appliance having a spindle.

7. Apparatus according to Claim 4 or 5, characterized in that the lifting drive consists of at least one chain drive (48 to 52) or at least one rope drive or the like.

8. Arrangement according to Claim 4, characterized in that the lifting drive consists of at least one weighted tackle line (55 to 59) acting on the slide tube (27, 27') in the lowering direction.

9. Arrangement according to one of Claims 1 to 8, characterized in that, in the case of a plurality of slide tubes (27, 27'), each of the same has allocated to it a retaining or positive-retraction device.

10. Arrangement according to one of Claims 1 to 9, characterized in that the telescopic chute (24) is of three-piece design and consists of the coupling tube (25) coupled to the clearing apparatus (4), the slide tube (27) which adjoins the coupling tube (25) at the bottom and passes through a base opening (28) in the silo base (10), and an upright tube (30) arranged beneath the silo base, the retaining or positive-retraction device being arranged below the silo base (10).

11. Arrangement according to Claim 10, characterized in that the upright tube (30) is formed by bellows (43) which are connected to the bottom end of the slide tube (27).

12. Arrangement according to one of Claims 1 to 11, characterized in that the clearing apparatus has at least one clearing arm (21) which is mounted in a vertically pivotable manner on a driven rotary member (16) to which the coupling tube (25) of the telescopic chute (24) is connected and which is mounted on a lifting frame (5) which is guided at its ends on vertical guides (8) of the silo wall.

13. Arrangement according to one of Claims 1 to 12, characterized by a control device controlling the working movement of the slide tube (27, 27') as a function of the lifting movement of the clearing apparatus (4).

14. Arrangement according to one of Claims 1 to 13, characterized by a guide device (53) arranged below the silo base (10) and guiding the slide tube (27) in such a way as to fix the latter in terms of rotation.

15. Method of controlling the lifting movements of a telescopic chute (24) which is arranged in a silo (1) and whose upper tubular part is formed by a coupling tube (25) which is connected to the clearing apparatus (4) and, as a plunging tube, reaches into a lower slide tube (27), characterized in that, during the lowering movement of the clearing apparatus (4) from the high position, first of all the coupling tube (25) is retracted relative to the slide tube positively held in the raised position, both tubes being lowered together only approximately after full retraction of the coupling tube (25) into the slide tube (27), and in that, conversely, during the upward movement of the clearing apparatus (4) from the low position, first of all the telescoped slide and coupling tubes (25, 27) are raised together in interaction between the lifting gear (9) of the clearing apparatus (4) and a lifting force acting from below on the slide tube (27), the coupling tube (25) being extended from the slide tube (27) only approximately after the stroke of the slide tube (27) has been used up.

FIG.1

FIG.3

FIG.2

FIG.4

FIG.5

FIG.6

FIG.7

4

FIG.8